# Europäisches Patentamt

## European Patent Office

## Office européen des brevets

(19)

(11) Veröffentlichungsnummer: **0 241 653**
**B1**

(12) **EUROPÄISCHE PATENTSCHRIFT**

(45) Veröffentlichungstag der Patentschrift:
18.07.90

(51) Int. Cl.⁵: **B60H 1/00**

(21) Anmeldenummer: **87101438.7**

(22) Anmeldetag: **03.02.87**

(54) Belüftungsanlage in Kraftfahrzeugen, insbesondere Omnibussen.

(30) Priorität: **16.04.86 DE 3612872**

(43) Veröffentlichungstag der Anmeldung:
**21.10.87 Patentblatt 87/43**

(45) Bekanntmachung des Hinweises auf die Patenterteilung:
**18.07.90 Patentblatt 90/29**

(84) Benannte Vertragsstaaten:
**AT BE CH DE ES FR GB GR IT LI NL SE**

(56) Entgegenhaltungen:
FR-A- 2 380 909
US-A- 2 718 186
US-A- 3 926 100
US-A- 4 201 064

PATENT ABSTRACTS OF JAPAN, Band 6,
Nr. 253 (M-178)[1131], 11. Dezember 1982; &
JP-A-57 147 913 (NIPPON DENSO K.K.) 13-09-1982

(73) Patentinhaber: **MAN Nutzfahrzeuge Aktiengesellschaft,
Dachauer Strasse 667 Postfach 50 06 20,
D-8000 München 50(DE)**

(72) Erfinder: **Geyer, Ludwig, Wettersteinstrasse 10,
D-8039 Puchheim(DE)**

## Beschreibung

Die Erfindung betrifft eine Belüftungsanlage in Kraftfahrzeugen, insbesondere in Omnibussen, mit einer für die Frischluftzufuhr auf dem rückwärtigen Teil des Omnibusdaches befindlichen Dachhutze, einer Staudruckklappe und einer Umluftklappe.

Es ist eine Anlage bekannt, die mit Staudruckklappe und Umluftklappe in der Dachhutze ausgerüstet ist. Hier hat sich aber in praxi das Problem gestellt, daß bei Schneefall die Öffnung der Dachhutze schnell massiv verschlossen ist. Der Einbau einer Heizung ist relativ teuer und führt auch erst nach geraumer Zeit zur Funktionstüchtigkeit. Es sind weiterhin Busse bekannt, deren Belüftung grundsätzlich über Öffnungen in den Seitenteilen erfolgt. Hier jedoch fehlen die vielfältigen Vorteile einer Frischluftzufuhr über einen Stauraum mit Klappe.

Der Erfindung liegt die Aufgabe zugrunde, eine Belüftungsanlage mit Dachhutze und Staudruckklappe derart zu verbessern, daß ihre volle Funktion auch bei winterlichen Verhältnissen gesichert ist.

Dies wird erfindungsgemäß dadurch erreicht, daß in Wirkkombination mit der Staudruckklappe im vorderen seitlichen Bereich der Dachhutze Pendelklappen angeordnet sind, wobei entweder die Staudruckklappe oder die Pendelklappen geöffnet sind. Solcherart werden alternativ zwei Belüftungsarten vorgesehen, einmal über die geöffnete Staudruckklappe die Beaufschlagung der Luftkanäle mit maximaler Frischluftzufuhr, zum anderen erfolgt bei Verschluß der Hutzenöffnung durch Schnee eine Teilbeaufschlagung über die seitlich an der Dachhutze geöffneten Pendelklappen. Dieser Notbetrieb wird solange aufrecht erhalten, bis die die Stauraumöffnung verschließende Schneemasse infolge Aufheizung des Omnibusses abgeschmolzen ist.

Nach einem ergänzenden Merkmal der Erfindung sind die Pendelklappen bei Staudruckbetrieb automatisch geschlossen. Dies ergibt sich aus dem Seitendruck der einfließenden Luft und ist insofern vorteilhaft, als eine Luftverwirbelung in den Seitenbereichen vermieden wird.

In Ausgestaltung der Erfindung ist an der Frontscheibe des Omnibusses, vorzugsweise im Heizbereich der Scheibenklardüsen, ein Feuchtigkeitsfühler angeordnet, der bei Regen- oder Schneefall die Staudruckklappe derart ansteuert, daß sie sich in einer geschlossenen Stellung befindet. Auf diese Weise braucht der Fahrer die Wettersituation nicht von Fall zu Fall zu beurteilen, vielmehr wird die Staudruckklappe bei Vorliegen ungünstiger Witterungsverhältnisse über den Feuchtigkeitsfühler mittels Hydraulik- oder Pneumatikzylinder automatisch geschlossen. Bei Klimabetrieb, also bei Umwälzung der inneren Wagenluft über die Umluftklappe, werden die Pendelklappen durch den Fahrtwind automatisch geöffnet, wobei die Ansaugöffnung derart dimensioniert ist, daß der Frischluftanteil ca. 20% beträgt, wodurch bis zum natürlichen Auftauen des Schneeverschlusses ausreichende Belüftungsverhältnisse gewährleistet sind.

Nach einem weiteren Merkmal der Erfindung wird die über die Pendelklappen eintretende Frischluft über ein Heizgebläse angesaugt. Wenn die Staudruckklappe geschlossen ist, werden die Pendelklappen vom Druck der Außenluft wie auch vom Sog der Umluft automatisch geöffnet, ist dagegen die Staudruckklappe offen, so werden die Pendelklappen durch Staudruck geschlossen gehalten.

Nach einer vorteilhaften Ausbildung der Erfindung sind die Pendelklappen als elastische Folien ausgebildet, wobei die Verformbarkeit in der Anbindung an die frontsteife Dachhutze als Scharnier wirkt. Dies ist eine besonders einfache Ausführungsart des erfinderischen Gedankens, indem keine Kinematik mit Drehgelenk oder metallischem Scharnier benötigt wird.

Weitere Merkmale und Vorteile der Erfindung sind den Ansprüchen, der Beschreibung und den Zeichnungen zu entnehmen.

Die Erfindung wird in einem Ausführungsbeispiel dargestellt.

Es zeigen:

Fig.1 Ein Omnibusoberteil in der Seitenansicht
Fig.2 ein Omnibusoberteil in der Draufsicht

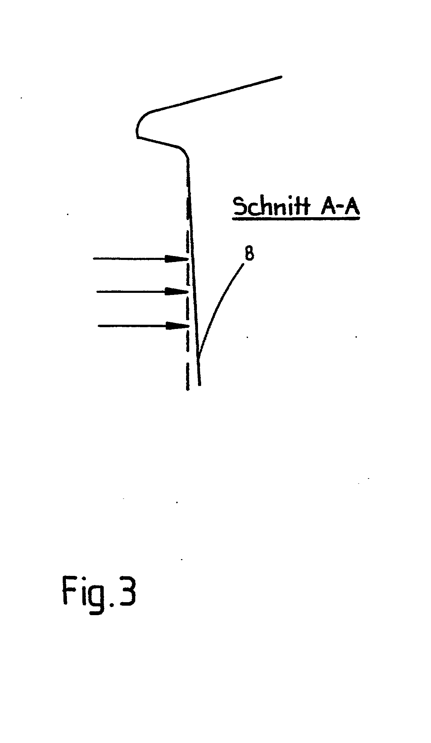

Fig.3 ein Ausschnitt A-A in der Seitenansicht

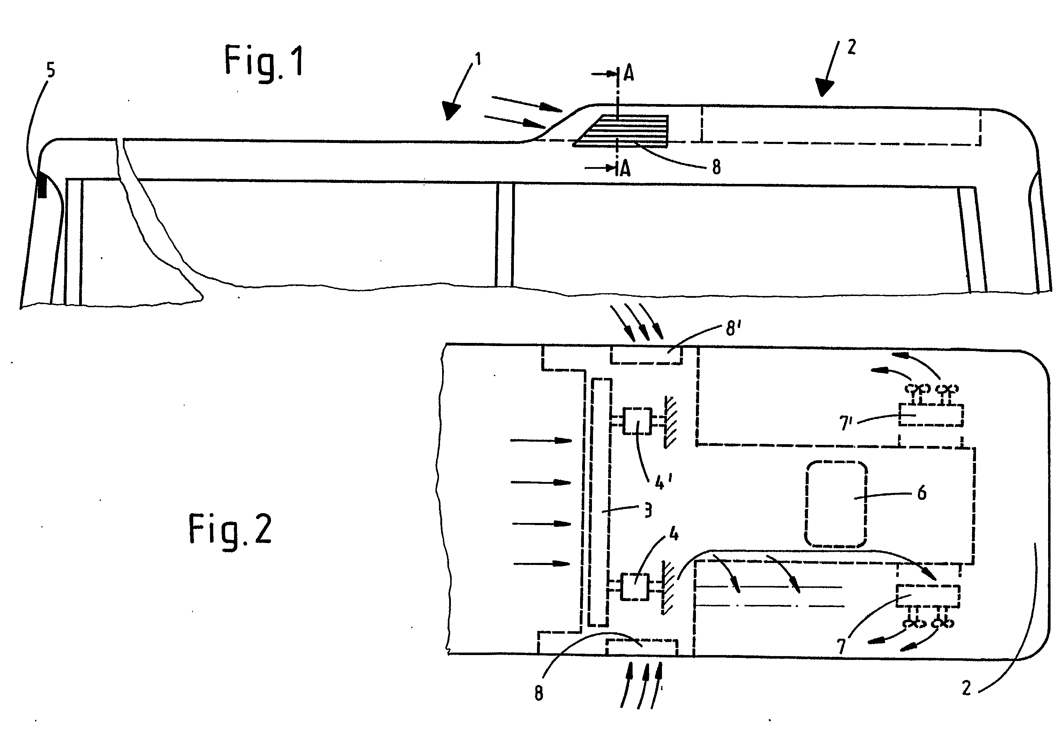

In Fig. 1 ist der obere Bereich der Seitenansicht eines Omnibusses (1) mit einer im hinteren Teil befindlichen Dachhutze (2) dargestellt. Aus Fig. 2 ersieht man die erfindungsgemäß wesentlichen Bauteile. So kann die in Fahrtrichtung eine Öffnung aufweisende Dachhutze mittels einer Stauklappe (3) geöffnet oder geschlossen werden. Die Stauklappe (3) wird mittels Pneumatik- oder Hydraulik-zylinder (4) betätigt, die über Verstärker von einem an der Frontscheibe, vorzugsweise im Heizbereich der Scheibenklardüsen, angeordneten Feuchtigkeitsfühler (5) angesteuert werden. Die Umluftklappe (6) kann im Wageninneren befindliche Luft unter Einschaltung der Heizgebläse (7, 7') umwälzen. Pendelklappen (8, 8') ermöglichen den seitlichen Eintritt von Frischluft zur Anreicherung der Umluft mit Sauerstoff. Die Pendelklappen (8, 8') und ihre zugehörigen Öffnungen in der Dachhutzenseitenwand sind so dimensioniert, daß sie in Bezug auf die Gesamtheit der umgewälzten Luftmaße etwa 20% Frischluft einbringen. Bei ungünstigen Witterungsbedingungen, vor allem bei Schneefall, wird die Staudruckklappe automatisch über vom Feuchtigkeitsfühler induzierte Meßwerte geschlossen. Damit entfällt der auf die Pendelklappen von innen wirkende Staudruck, so daß diese nunmehr öffnen und einen ausreichenden Frischluftanteil gewährleisten, bis die vor der Dachhutze befindliche Schneemasse durch die Aufheizung des Wagendaches abgetaut ist und somit die Staudruckklappe wieder geöffnet werden kann. Eine besonders einfache Art der Pendelklappenausführung ergibt sich durch Anbringung einer biegeweichen Folie im Bereich der seitlichen Öffnungen.

Bezugszeichenliste

1 Omnibus
2 Dachhutze an 1
3 Stauklappe
4, 4' Hydraulik- oder Pneumatikzylinder
5 Feuchtigkeitsfühler
6 Umluftklappe
7, 7' Heizgebläse
8, 8' Pendelklappen

**Patentansprüche**

1. Belüftungsanlage in Kraftfahrzeugen, insbesondere in Omnibussen, mit einer für die Frischluftzufuhr auf dem rückwärtigen Teil des Omnibusses befindlichen Dachhutze (2), einer Staudruckklappe (3) und einer Umluftklappe (6), dadurch gekennzeichnet, daß in Wirkkombination mit der Staudruckklappe (3) im vorderen seitlichen Bereich der Dachhutze (2) Pendelklappen (8, 8') angeordnet sind, wobei entweder die Staudruckklappe (3) oder alternativ die Pendelklappen (8, 8') geöffnet sind.

2. Belüftungsanlage nach Anspruch 1, dadurch gekennzeichnet, daß die Pendelklappen (8, 8') bei Staudruckbetrieb automatisch geschlossen sind.

3. Belüftungsanlage nach Anspruch 1 oder 2, dadurch gekennzeichnet, daß an der Frontscheibe des Omnibusses (1), vorzugsweise im Heizbereich der Scheibenklardüsen ein Feuchtigkeitsfühler (5) angeordnet ist, der bei Regen oder Schneefall die Staudruckklappe (3) derart ansteuert, daß sie sich in einer geschlossenen Stellung befindet.

4. Belüftungsanlage nach den Ansprüchen 1 bis 3, dadurch gekennzeichnet, daß bei Klimabetrieb die Staudruckklappe (3) geschlossen und die Umluftklappe (6) wie auch die Pendelklappen (8, 8') geöffnet sind, wobei über die Pendelklappen (8, 8') ein Frischluftanteil vom mindestens 20% eingespeist wird.

5. Belüftungsanlage nach einem oder mehreren der Ansprüche 1 bis 4, dadurch gekennzeichnet, daß die über die Pendelklappen (8, 8') eintretende Frischluft über Heizgebläse (7, 7') angesaugt wird.

6. Belüftungsanlage nach einem oder mehreren der Ansprüche 1 bis 5, dadurch gekennzeichnet, daß die Pendelklappen (8, 8') als elastische Folien ausgebildet sind, wobei die Verformbarkeit in der Anbindung an die formsteife Dachhutze als Scharnier wirkt.

**Claims**

1. A ventilation installation in motor vehicles, more particularly in buses, comprising a roof scoop (2) situated at the rear part of the bus for the fresh air supply, a dynamic pressure flap (3), and a circulating air flap (6), characterised in that swing flaps (8, 8') are disposed in the front side area of the roof scoop (2) in operative combination with the dynamic pressure flap (3) either the dynamic pressure flap (3) or alternatively the swing flaps (8, 8') being opened.

2. A ventilation installation according to claim 1, characterised in that the swing flaps (8, 8') are automatically closed in dynamic pressure operation.

3. A ventilation installation according to claim 1 or 2, characterised in that a moisture sensor (5) is disposed on the windscreen of the bus (1), preferably in the heating zone of the screen demist nozzles end so controls the dynamic pressure flap (3) in the event of rain or snow that it is in a closed position.

4. A ventilation installation according to claim 1, characterised in that the dynamic pressure flap (3) is closed and the circulating air flap (6) end also the swing flaps (8, 8') are opened in air-conditioning operation, a fresh air component of at least 20% being fed in via the swing flaps (8, 8').

5. A ventilation installation according to one or more of claims 1 to 4, characterised in that the fresh air entering via the swing flaps (8, 8') is drawn in via heating blowers (7, 7').

6. A ventilation installation according to one or more of claims 1 to 5, characterised in that the swing flaps (8, 8') are constructed as elastic foils, the deformability in the attachment to the dimensionally stable roof scoop acting as a hinge.

**Revendications**

1. Dispositif d'aération de véhicules à moteur, en particulier d'omnibus, comportant pour l'amenée d'air frais un couvre-toit (2) situé sur la partie arrière de l'omnibus, un clapet (3) de pression de retenue et un clapet (6) d'air de circulation, dispositif caractérisé en ce que, en combinaison d'action avec le clapet (3) de pression de retenue, des clapets oscillants (8, 8') sont montés dans la zone latérale antérieure du couvre-toit (2), en précisant que, soit le clapet (3) de pression de retenue, soit en alternance les clapets oscillants (8, 8') sont en position d'ouverture.

2. Dispositif d'aération selon la revendication 1, caractérisé en ce que les clapets oscillants (8, 8') sont fermés automatiquement lors du fonctionnement avec pression de retenue.

3. Dispositif d'aération selon la revendication 1 ou 2, caractérisé en ce qu'un détecteur d'humidité (5) est monté sur la vitre frontale de l'omnibus (1), de préférence dans la zone chauffante des buses antibuée de la vitre, détecteur d'humidité qui en cas de pluie ou de chute de neige commande le clapet (3) de pression de retenue, de telle manière, que celui-ci se trouve dans une position de fermeture.

4. Dispositif d'aération selon les revendications 1 à 3, caractérisé en ce que, en fonctionnement de climatisation, le clapet (3) de pression de retenue est fermé et le clapet (6) d'air de circulation comme aussi les clapets oscillants (8, 8') sont ouverts, une proportion d'air frais d'au moins 20% étant alors introduite par l'intermédiaire des clapets oscillant (8, 8').

5. Dispositif d'aération selon l'une ou plusieurs des revendications 1 à 4, caractérisé en ce que l'air frais entrant par l'intermédiaire des clapets oscillants (8, 8') est aspiré au moyen de ventilateurs de chauffage (7, 7').

6. Dispositif d'aération selon l'une ou plusieurs des revendications 1 à 5, caractérisé en ce que les clapets oscillants (8, 8') sont constitués sous la forme de feuilles élastiques, leur possibilité de déformation, en liaison avec le couvre-toit de conformation rigide, agissant alors sous forme de charnière.

Fig.1

Fig.2

Schnitt A-A

8

Fig.3